# EUROPÄISCHE PATENTANMELDUNG

(11) **EP 3 309 002 A1**
(43) Veröffentlichungstag der Anmeldung: **18.04.2018**
(21) Anmeldenummer: 17001676.0
(22) Anmeldetag: 11.10.2017
(51) Int. Cl.: B60L 11/18, H01R 13/533

(54) **VERSORGUNGSMULDENMODUL FÜR EIN FAHRZEUG**

(30) Priorität: 12.10.2016 DE 102016012181
(71) Anmelder: AUDI AG, 85045 Ingolstadt (DE)
(72) Erfinder: Sanchez, Jaume, DE - 85128 Nassenfels (DE)
(74) Vertreter: Mader, Wilfried

(57) **Zusammenfassung**

Die Erfindung betrifft ein Versorgungsmuldenmodul (10) für ein Fahrzeug, mit einem Grundkörper (20), welcher mindestens eine Versorgungsöffnung (30) umfasst, wobei die mindestens eine Versorgungsöffnung (30) geeignet ist, einen wiederaufladbaren elektrischen Speicher mit einem Ladekabel zu koppeln. Erfindungsgemäß ist im Bereich der mindestens einen Versorgungsöffnung (30) mindestens ein Heizelement (40) angeordnet.

## Beschreibung

Die Erfindung betrifft ein Versorgungsmuldenmodul für ein Fahrzeug gemäß der Gattung des Patentanspruchs 1.

Versorgungsmuldenmodule für Fahrzeuge sind in zahlreichen Variationen bekannt. Solche Versorgungsmuldenmodule können einen Grundkörper mit mindestens einer Versorgungsöffnung umfassen. Die mindestens eine Versorgungsöffnung kann einen wiederaufladbaren elektrischen Speicher mit einem Ladekabel koppeln. Der Grundkörper kann zudem weitere Versorgungsöffnungen aufweisen. Beispielsweise kann eine Versorgungsöffnung einen Tankeinfüllstutzen aufnehmen, welcher eine Zapfpistole zur Befüllung des Fahrzeugtanks mit Kraftstoff aufnehmen kann. Der Grundkörper kann eine wannenartige Form aufweisen, wobei im Wannenboden die Versorgungsöffnung angeordnet ist. In der Wanne können sich Schnee und Eis während der Ladezweit des wiederaufladbaren elektrischen Speichers ansammeln.

Aus der DE 10 2014 011 843 A1 ist eine Ladeanschlussvorrichtung für einen Kraftwagen bekannt, welcher zumindest einem zum Antreiben des Kraftwagens ausgebildeten Elektromotor aufweist. Die Ladeanschlussvorrichtung umfasst ein Ladekabel, welches an seinem ersten Ende einen Netzstecker für eine Haushaltssteckdose aufweist und mit seinem zweiten Ende zumindest mittelbar mit einer Batterie des Kraftwagens verbunden ist. Zudem umfasst die Ladeanschlussvorrichtung ein Staufach, in welchem das Ladekabel aufgenommen ist; und eine zumindest mittelbar mit der Batterie des Kraftwagens verbindbare Ladebuchse, in welche ein Ladestecker einer Ladesäule einsteckbar ist. Das Ladekabel weist an seinem zweiten Ende einen Ladebuchsenstecker auf, welcher in die Ladebuchse einsteckbar ist.

Der Erfindung liegt die Aufgabe zu Grunde, ein Versorgungsmuldenmodul für ein Fahrzeug bereitzustellen, welches einen integrierten Schutz vor Eis und/oder Schnee aufweist.

Erfindungsgemäß wird die Aufgabe durch Bereitstellung eines Versorgungsmuldenmoduls für ein Fahrzeug mit den Merkmalen des Patentanspruchs 1 gelöst. Vorteilhafte Ausführungsformen und Weiterbildungen der Erfindung sind in den abhängigen Ansprüchen angegeben.

Um ein Versorgungsmuldenmodul für ein Fahrzeug bereitzustellen, welches einen integrierten Schutz vor Eis und/oder Schnee aufweist, ist im Bereich von mindestens einer Versorgungsöffnung mindestens ein Heizelement angeordnet.

Unter einem Versorgungsmuldenmodul wird im Folgenden eine Baugruppe mit einem Grundkörper verstanden, welcher die mindestens eine Versorgungsöffnung aufweist. Der Grundkörper kann hierbei mehrere Versorgungsöffnungen aufweisen. Eine erste Versorgungsöffnung kann einen wiederaufladbaren elektrischen Speicher, wie beispielsweise eine Fahrzeugbatterie mit einem Ladekabel koppeln. Zu diesem Zweck kann die erste Versorgungsöffnung eine multifunktionale Steckdose aufnehmen, welche mit dem korrespondierenden Ladekabel gekoppelt werden kann. Eine zweite Versorgungsöffnung kann beispielsweise einen Tankeinfüllstutzen aufnehmen, welcher eine Zapfpistole zur Befüllung eines Fahrzeugtanks mit Kraftstoff aufnehmen kann. Alternativ oder zusätzlich kann der Grundkörper weitere Versorgungsöffnungen zur Aufnahme von Einfüllstutzen aufweisen, über welche dem Fahrzeug Wasser, Öl, oder andere Betriebsstoffe zugeführt werden können. Eine Klappe kann den Grundkörper abdecken und beweglich am Grundköper oder an einem den Grundkörper umgebenden Trägerteil des Fahrzeugs angeordnet werden. Der Grundkörper bzw. die dahinter angeordneten Versorgungsöffnungen und korrespondierenden Komponenten können durch die beweglich gelagerte Klappe bei Bedarf zugänglich gemacht werden. Zudem schützt die Klappe im geschlossenen Zustand die dahinter angeordneten Komponenten vor äußeren Einflüssen. Während des Ladevorgangs des wiederaufladbaren elektrischen Speichers weist die Klappe einen geöffneten Zustand auf. Bei längeren Ladezeiten kann sich bei bekannten Versorgungsmuldenmodulen bei geöffneter Klappe Schnee und/oder Eis um die mindestens eine Versorgungsöffnung ansammeln. Diese Ansammlungen können ein einfaches Schließen der Klappe verhindern, so dass ein Anwender erst den Schnee und/oder das Eis entfernen muss, bevor er die Klappe schließen kann.

In vorteilhafter Weise kann das mindestens eine Heizelement eine Abtauvorrichtung ausbilden. Hierbei kann das Heizelement aktiviert werden, bevor die Klappe geschlossen wird. Dadurch können Schnee und/oder das Eis wegeschmolzen werden, bevor die Klappe geschlossen wird. Alternativ oder zusätzlich kann das mindestens eine Heizelement während des Ladevorgangs des wiederaufladbaren elektrischen Speichers dauerhaft eine vorgegebene Temperatur im Bereich der Versorgungsöffnung erzeugen, welche oberhalb der Schmelztemperatur von Schnee und/oder Eis liegt. Dadurch kann in vorteilhafte Weise ein Ansammeln von Schnee und/oder Eis verhindert werden.

In vorteilhafter Ausgestaltung des erfindungsgemäßen Versorgungsmuldenmoduls kann das mindestens eine Heizelement als Heizfolie ausgeführt werden. Heizfolien können in vorteilhafter Weise in nahezu jede geometrische Form gebracht werden. Zudem können sie dünn ausgeführt und in hoher Stückzahl kostengünstig hergestellte werden.

In weiterer vorteilhafter Ausgestaltung des erfindungsgemäßen Versorgungsmuldenmoduls kann das mindestens eine Heizelement innerhalb einer Wand des Grundkörpers angeordnet werden. Beispielsweise kann das mindestens eine Heizelement in die Wand eingespritzt und/oder eingegossen werden. In vorteilhafte Weise kann das mindestens eine Heizelement von der umgebenden Wand geschützt werden und dabei die Wand erwärmen. Auf der erwärmten Wand kann sich in vorteilhafter Weise weder Schnee noch Eis dauerhaft ablagern.

In weiterer vorteilhafter Ausgestaltung des erfindungsgemäßen Versorgungsmuldenmoduls kann das mindestens eine Heizelement auf einer Innenfläche der Wand des Grundkörpers angeordnet werden. Alternativ oder zusätzlich kann das mindestens eine Heizelement auf einer Außenfläche der Wand des Grundkörpers angeordnet werden. Unter der Innenfläche wird die Fläche verstanden, welche im Wesentlichen dem Fahrzeuginnenraum zugewandt ist. Unter der Außenfläche wird im Folgenden die Fläche verstanden, welche im Wesentlichen der Fahrzeugumgebung zugewandt und bei geöffneter Klappe von außen zugänglich ist. In vorteilhafter Weise ist das auf der Außenfläche angeordnete Heizelement sehr effektiv, da die erzeugte Wärmeenergie dort erzeugt wird, wo sie gebraucht wird. Das an der Innenfläche angeordnete Heizelement ist in vorteilhafter Weise besser vor äußeren Einflüssen geschützt.

In weiterer vorteilhafter Ausgestaltung des erfindungsgemäßen Versorgungsmuldenmoduls kann das mindestens eine Heizelement mindestens eine Aussparung für die mindestens eine Versorgungsöffnung aufweisen. In vorteilhafter Weise kann der Großteil des Wandbereichs, welcher, die mindestens eine Versorgungsöffnung begrenzt, von dem Heizelement erwärmt werden. Hierbei kann das mindestens eine Heizelement einfach mit dem Wandbereich verbunden werden und die mindestens eine Versorgungsöffnung umranden. Alternativ können mehrere Heizelemente die mindestens eine Versorgungsöffnung umranden.

In weiterer vorteilhafter Ausgestaltung des erfindungsgemäßen Versorgungsmuldenmoduls kann das mindestens eine Heizelement innerhalb einer den Grundkörper verschließen Klappe angeordnet werden. Die erwärmte Klappe kann einen seitlichen Bereich des Grundkörpers, an welchem die Klappe beweglich gelagert ist, erwärmen und dadurch störendes Eis und/oder Schnee schmelzen. Zudem kann die erwärmte Klappe beim Schließen den Schnee und/oder das Eis schmelzen und dadurch schneller geschlossen werden. Das mindestens eine Heizelement kann alternativ oder zusätzlich auf einer Oberfläche der Klappe angeordnet werden.

Ein Ausführungsbeispiel der Erfindung ist in der Zeichnung dargestellt und wird in der nachfolgenden Beschreibung näher erläutert. In der Zeichnung bezeichnen gleiche Bezugszeichen Komponenten bzw. Elemente, die gleiche bzw. analoge Funktionen ausführen. Hierbei zeigt:
- Fig. 1: eine schematische perspektivische Darstellung eines Ausführungsbeispiels eines erfindungsgemäßen Versorgungsmuldenmoduls für ein Fahrzeug, und
- Fig. 2: eine schematische perspektivische Darstellung eines Heizelements des erfindungsgemäßen Versorgungsmuldenmodul aus Fig. 1.

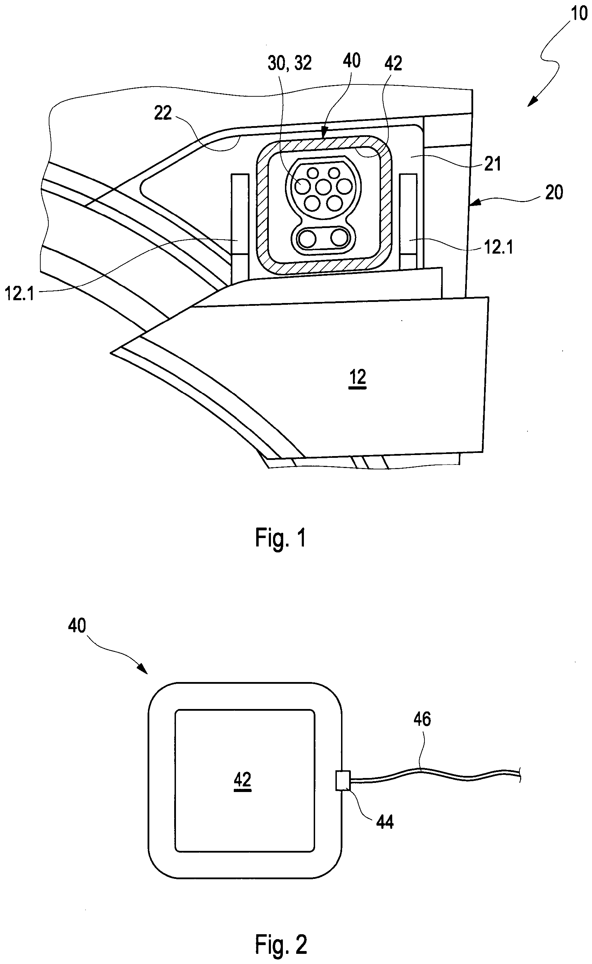

Wie aus Fig. 1 ersichtlich ist, weist ein Versorgungsmuldenmodul 10 für ein Fahrzeug einen Grundkörper 20 auf, welcher mindestens eine Versorgungsöffnung 30 umfasst. Die mindestens eine Versorgungsöffnung 30 ist geeignet einen wiederaufladbaren elektrischen Speicher mit einem Ladekabel zu koppeln.

Erfindungsgemäß ist im Bereich der mindestens einen Versorgungsöffnung 30 mindestens ein Heizelement 40 angeordnet.

Wie aus Fig. 1 weiter ersichtlich ist, umfasst der Grundkörper 20 eine umlaufende Wand 22 und einen Boden 21. In den Boden 21 ist die mindestens eine Versorgungsöffnung 30 eingebracht. Im dargestellten Ausführungsbeispiel des erfindungsgemäßen Versorgungsmuldenmoduls 10 ist eine Versorgungsöffnung 30 vorhanden, wobei die Versorgungsöffnung 30 eine multifunktionale Steckdose 32 aufweist, welche einen nicht dargestellten als Fahrzeugbatterie ausgeführten wiederaufladbaren elektrischen Speicher mit einem nicht dargestellten Ladekabel einer Ladestation koppelt. In einem alternativen nicht dargestellten Ausführungsbeispiel können am Boden 21 weitere Versorgungsöffnungen 30 angeordnet werden, welche beispielsweise einen Einfüllstutzen aufnehmen können, über welchen Betriebsstoffe, wie beispielsweise Kraftstoff, Kühlmittel, Reinigungsmittel, Öl usw. in entsprechende Vorratsbehälter eingefüllt werden können. Ein beispielswiese als Tankeinfüllstutzen ausgeführter Einfüllstutzen kann eine Zapfpistole aufnehmen, über welche ein nicht dargestellter Fahrzeugtank mit Kraftstoff befüllt werden kann.

Wie aus Fig. 1 weiter ersichtlich ist, weist das erfindungsgemäße Versorgungsmuldenmodul 10 eine Klappe 12 auf, welche beweglich am Grundkörper 20 angeordnet ist. In einem alternativen nicht dargestellten Ausführungsbeispiel kann die Klappe 12 an einem den Grundkörper 20 umgebenden nicht dargestellten Trägerteil des Fahrzeugs beweglich angeordnet werden. Die Klappe 12 weist zwei Schiebescharniere 12.1 auf, über welche die Klappe 12 nach unten geschoben werden kann. In einem alternativen nicht dargestellten Ausführungsbeispiel kann die Klappe 12 seitlich nach außen oder nach oben geschoben werden. Zudem kann die Klappe 12 alternativ Schwenkscharniere aufweisen, welche ein Verschwenken oder Umklappen der Klappe 12 ermöglichen. Im geschlossenen Zustand liegt die Klappe 12 an dem Grundkörper 20 an und schützt die multifunktionale Steckdose 32 vor äußeren Einflüssen. Zudem ist die Klappe 12 im geschlossenen Zustand fluchtend zu den umgebenden Karosserieteilen angeordnet. Im offenen Zustand steht die Klappe 12 von dem Grundkörper 20 ab und gibt die multifunktionale Steckdose 32 frei. Die Klappe 12 kann mechanisch und/oder elektrisch betätigt werden.

Wie aus Fig. 1 weiter ersichtlich ist, erwärmt ein Heizelement 40 den die Versorgungsöffnung 30 begrenzenden Bereich und erschwert die Bildung von Eis oder das Ansammeln von Schnee und Eis in diesem Bereich. Dadurch ist das erfindungsgemäße Versorgungsmuldenmodul 10 auch bei kalter Witterung vor Schnee und Eis geschützt, ohne dass das Fahrzeug überdacht abgestellt wird. Dadurch kann ein Ladevorgang des wiederaufladbaren elektrischen Speichers auch über einen längeren Zeitraum bei kalter Witterung erfolgen, wobei das Schließen der Klappe 12 nicht durch Schnee- und/oder Eisablagerungen erschwert wird. Alternativ kann mehr als ein Heizelement 40 im Bereich der Versorgungsöffnung 30 angeordnet werden.

Wie aus Fig. 1 weiter ersichtlich ist, ist im dargestellten Ausführungsbeispiel des erfindungsgemäßen Versorgungsmuldenmoduls 10 das schraffiert dargestellte Heizelement 40 innerhalb des Bodens 21 des Grundkörpers 20 angeordnet. Alternativ oder zusätzlich kann das Heizelement 40 auch in der umlaufenden Wand 22 angeordnet werden. Um eine Anordnung innerhalb der Wand umzusetzen, kann das Heizelement in die Wand 21, 22 eingegossen oder eingespritzt werden.

In einem weiteren nicht dargestellten alternativen Ausführungsbeispiel kann das Heizelement 40 auf einer Innenfläche der Wand 21, 22 des Grundkörpers 20 oder an einer Außenfläche der Wand 21, 22 des Grundkörpers 20 angeordnet werden. Hierbei ist auch eine Kombination von auf der Außenseite und der Innenseite angebrachten und innerhalb der Wand eingebrachten Heizelementen 40 möglich.

In einem weiteren nicht dargestellten alternativen Ausführungsbeispiel kann das Heizelement 40 innerhalb Klappe 12 angeordnet werden. Zudem ist eine Anordnung des Heizelements 40 auf einer Klappenoberfläche, beispielsweise auf einer der Versorgungsöffnung 30 zugewandten Oberfläche vorstellbar. Das in der Klappe 12 angeordnete Heizelement 40 kann mit dem in dem im Grundkörper 20 angeordneten Heizelement 40 kombiniert werden.

Wie aus Fig. 2 weiter ersichtlich ist, ist das Heizelement 40 im dargestellten Ausführungsbeispiel als Heizfolie ausgeführt. Es können auch andere geeignete Heizelemente 40, wie beispielsweise Heizdrähte oder Heizflächen eingesetzt werden. Das als Heizfolie ausgeführte Heizelement 40 weist im dargestellten Ausführungsbeispiel eine Aussparung 42 für die Versorgungsöffnung 30 auf. Zudem umfasst das Heizelement 40 einen elektrischen Anschluss 44 und ein Kabel 46. Das Kabel 46 ist mit dem elektrischen Anschluss 44 gekoppelt und verbrindet das Heizelement mit einer nicht dargestellten fahrzeugseitig angeordneten Energiequelle.

### BEZUGSZEICHENLISTE

- 10: Versorgungsmuldenmodul
- 12: Klappe
- 12.1: Scharnier
- 20: Grundkörper
- 21: Wand Boden
- 22: Wand Seite
- 30: Versorgungsöffnung
- 32: multifunktionale Steckdose
- 40: Heizelement
- 42: Aussparung
- 44: Anschluss
- 46: Kabel

## Patentansprüche

1. Versorgungsmuldenmodul (10) für ein Fahrzeug mit einem Grundkörper (20), welcher mindestens eine Versorgungsöffnung (30) umfasst, wobei die mindestens eine Versorgungsöffnung (30) geeignet ist, einen wiederaufladbaren elektrischen Speicher mit einem Ladekabel zu koppeln, **dadurch gekennzeichnet, dass** im Bereich der mindestens einen Versorgungsöffnung (30) mindestens ein Heizelement (40) angeordnet ist.

2. Versorgungsmuldenmodul nach Anspruch 1, **dadurch gekennzeichnet, dass** das mindestens eine Heizelement (40) als Heizfolie ausgeführt ist.

3. Versorgungsmuldenmodul nach Anspruch 1 oder 2, **dadurch gekennzeichnet, dass** das mindestens eine Heizelement (40) innerhalb einer Wand (21, 22) des Grundkörpers (20) angeordnet ist.

4. Versorgungsmuldenmodul nach einem der Ansprüche 1 bis 3, **dadurch gekennzeichnet, dass** das mindestens eine Heizelement (40) auf einer Innenfläche der Wand (21, 22) des Grundkörpers (20) angeordnet ist.

5. Versorgungsmuldenmodul nach einem der Ansprüche 1 bis 4, **dadurch gekennzeichnet, dass** das mindestens eine Heizelement (40) auf einer Außenfläche der Wand (21, 22) des Grundkörpers (20) angeordnet ist.

6. Versorgungsmuldenmodul nach einem der Ansprüche 1 bis 5, **dadurch gekennzeichnet, dass** das mindestens eine Heizelement (40) mindestens eine Aussparung (42) für die mindestens eine Versorgungsöffnung (30) aufweist.

7. Versorgungsmuldenmodul nach einem der Ansprüche 1 bis 6, **dadurch gekennzeichnet, dass** das mindestens eine Heizelement (40) innerhalb einer, den Grundkörper (20) verschließenden Klappe (12), angeordnet ist.

8. Versorgungsmuldenmodul nach Anspruch 7, **dadurch gekennzeichnet, dass** das mindestens eine Heizelement (40) auf einer Klappenoberfläche angeordnet ist.
